(19) Europäisches Patentamt
European Patent Office
Office européen des brevets

(11) Veröffentlichungsnummer : **0 426 700 B1**

# (12) EUROPÄISCHE PATENTSCHRIFT

(45) Veröffentlichungstag der Patentschrift :
**11.08.93 Patentblatt 93/32**

(51) Int. Cl.$^5$ : **C09K 19/38,** C08F 20/10, C08F 20/30

(21) Anmeldenummer : **89907711.9**

(22) Anmeldetag : **29.06.89**

(86) Internationale Anmeldenummer :
**PCT/EP89/00746**

(87) Internationale Veröffentlichungsnummer :
**WO 90/00585 25.01.90 Gazette 90/03**

## (54) FERROELEKTRISCHE FLÜSSIGKERISTALLINE POLYMERE, EIN VERFAHREN ZU IHRER HERSTELLUNG UND IHRE VERWENDUNG IN ELEKTROOPTISCHEN BAUTEILEN.

(30) Priorität : **08.07.88 DE 3823154**

(43) Veröffentlichungstag der Anmeldung :
**15.05.91 Patentblatt 91/20**

(45) Bekanntmachung des Hinweises auf die Patenterteilung :
**11.08.93 Patentblatt 93/32**

(84) Benannte Vertragsstaaten :
**AT BE CH DE FR GB IT LI NL SE**

(56) Entgegenhaltungen :
**EP-A- 0 258 898**
**EP-A- 0 296 571**

(73) Patentinhaber : **HOECHST AKTIENGESELLSCHAFT**
**W-6230 Frankfurt am Main 80 (DE)**

(72) Erfinder : **SCHEROWSKY, Günter**
**Winklerstrasse 18B**
**W-1000 Berlin 33 (DE)**
Erfinder : **SCHLIWA, Andreas**
**Spenerstrasse 14a**
**W-1000 Berlin 21 (DE)**
Erfinder : **TRAPP, Wolfgang**
**Weimarstrasse 35**
**W-1000 Berlin 12 (DE)**

EP 0 426 700 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Ferroelektrische flüssigkristalline Polymere, ein Verfahren zu ihrer Herstellung und ihre Verwendung in elektrooptischen Bauteilen

Flüssigkristalle haben in jüngerer Zeit Eingang in verschiedene technische Gebiete gefunden, in denen bestimmte elektro-optische Eigenschaften (z. B. kleine Ansteuerspannungen) in Verbindung mit bestimmten Anforderungen an Anzeige- oder Schaltvorrichtungen (z.B. flache Bauweise, geringes Gewicht) gefragt sind. Diese Vorrichtungen beruhen z.Z. auf dielektrischen Ausrichtungseffekten in nematischen, cholesterischen und/oder smektischen Flüssigkristallphasen, wobei die Lichtdurchlässigkeit oder -reflektivität der Vorrichtung von der angelegten elektrischen Spannung abhängt.

Ein Flüssigkristalldisplay besteht aus zwei Trägerplatten, vorzugsweise Glasplatten, die mit transparenten Elektroden und in der Regel mit einer oder zwei Orientierungsschichten beschichtet sind, zwischen denen sich die Flüssigkristallschicht befindet. Als weitere Komponenten sind Polarisatoren, Farbfilter, Passivierungs-, Antireflex-, Diffisionssperr- u.ä. Schichten gebräuchlich.

Während derzeit noch überwiegend nematische oder chloesterische Flüssigkristallphasen verwendet werden, haben seit einigen Jahren in zunehmendem Maße auch ferroelektrische, insbesondere smektische C*, Flüssigkristallphasen an Bedeutung gewonnen. Ferroelektrische Flüssigkristalle besitzen den Vorteil sehr kurzer Schaltzeiten und ermöglichen den Betrieb von hochauflösenden Bildschirmen ohne Zuhilfenahme elektronischer Elemente, wie z.B. Dünnschichttransistoren, die bei der Verwendung nematischer oder chloresterischer Flüssigkristallphasen erforderlich sind.

Bei allen genannten Anwendungen handelte es sich um niedermolekulare flüssigkristalline Verbindungen, d.h. mit Molmassen unterhalb von 2000 g/mol, vorzugsweise unterhalb von 800 g/mol, insbesondere aber nicht um Polymere, Copolymere, Polykondensate oder Copolykondensate. Wegen ihrer geringeren Viskosität besitzen niedermolekulare Flüssigkristalle im allgemeinen den Vorteil kurzer Schaltzeiten; dies gilt insbesondere für ferroelektrische Flüssigkristalle, deren Schaltzeiten im Bereich von µs liegen und die damit 10 bis 1000 mal schneller schalten als konventionelle nematische Flüssigkristallphasen.

Bei der Anwendung ferroelektrischer Flüssigkristalle kann jedoch das Problem der hohen Anfälligkeit der Orientierung hinsichtlich mechanischer Beanspruchung (Stoß, Schlag, Druck, thermische Verformung, Verbiegung usw.), auftreten, was zu einer irreversiblen Störung der Bildqualität eines Displays führen kann. Diese hohe Empfindlichkeit erschwert derzeit den Bau flexibler ferroelektrischer LC-Displays und verteuert die Herstellung konventioneller, d.h. mit Glas oder starren Kunststoffplatten versehenen, Displays.

Wegen ihrer geringeren Deformierbarkeit und besseren Verarbeitbarkeit ist die Verwendung polymerer Flüssigkristalle vorteilhaft.

Polymere Flüssigkristalle wurden bereits mehrfach beschrieben (z.B. J. Polym.Sci. Polym.Lett., Ed. 13, 243 (1975); Polym.Bull. 6, 309 (1982)), jedoch weisen die bislang beschriebenen polymeren Flüssigkristalle für praktische Zwecke zu langsame Schaltzeilen auf.

Ferroelektrische, schnellschaltende polymere Flüssigkristalle sollten sich daher zur Herstellung flexibler Displays besonders eignen.

Besonders vorteilhaft wäre die Produktion einer Displayfolie in einem kontinuierlichen Prozeß, wozu jedoch schnell schaltende polymere ferroelektrische Flüssigkristalle benötigt werden. Daher bezieht sich die vorliegende Erfindung auf die Bereitstellung neuer polymerer, ferroelektrischer Flüssigkristalle.

Die neuen Verbindung stellen Polymere dar, die aus wiederkehrenden Einheiten der Formel (I) bestehen:

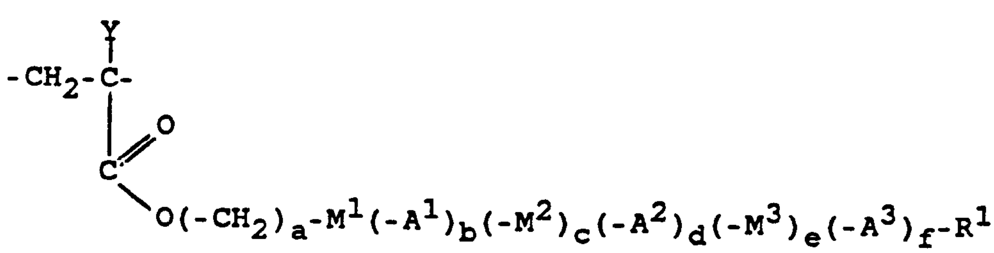

wobei

Y = H, $CH_3$, F,

$R^1$ = Rest mit mindestens zwei Chiralitätszentren gemäß einer der allgemeinen Formeln

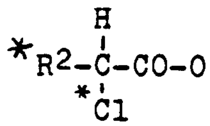 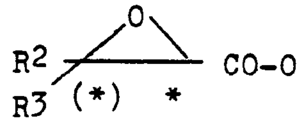 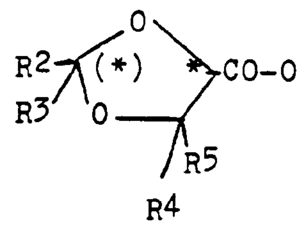

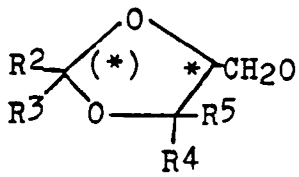 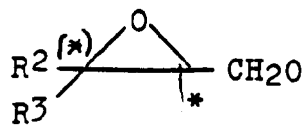

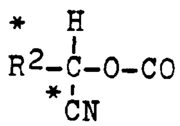 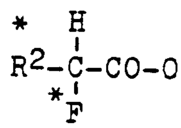 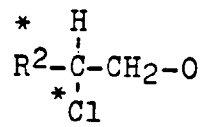

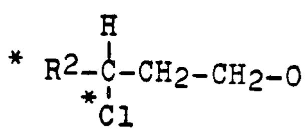 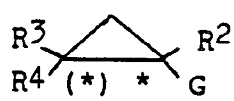

| | |
|---|---|
| $R^2,R^3,R^4,R^5$ | =H oder geradkettiges oder verzweigtes, chirales oder achirales Alkyl mit 1 bis 16 oder Alkenyl mit 2 bis 16 C-Atomen, bei dem auch eine $-CH_2$-Gruppe durch -O-, -CO-O-oder -O-CO- ersetzt sein kann, oder $R^2$ und $R^3$ bzw. $R^3$ und $R^4$ zusammen ein cyclisches Alkyl mit 3 bis 8 C-Atomen |
| $*R^2$ | = chirales $R^2$ |
| (*) | = chirales C falls $R^2$, $R^3$ und/oder $R^4$ achiral |
| a | = 2 bis 20, vorzugsweise 6 bis 12 |
| b,c,d,e,f | = 0 oder 1 mit der Maßgabe, daß d+e+f = 2 oder 3 ist |
| $A^1,A^2,A^3$ | = gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6-diyl, Pyridin-2,5-diyl, Pyrimidin-2,5-diyl, (1,3,4)-Thiadiazol-2,5-diyl, 1,3-Dioxan-2,5-diyl, 1,3-Dithian-2,5-diyl |
| $M^2,M^3$ | = gleich oder verschieden CO-O, O-CO, CO-S, S-CO, $CH_2$-O, O-$CH_2$, $CH_2$-$CH_2$ |
| $M^1$ | = O, |

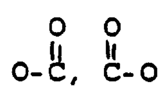

| | |
|---|---|
| G | = geradkettiges oder verzweigtes Alkylen mit 1 bis 16 C-Atomen oder Alkenylen mit 2 bis 16 C-Atomen, bei dem auch eine öder zwei nichtbenachbarte $-CH_2$-Gruppen durch -O-, -S-, -O-CO-, -CO-O-, -S-CO- oder -CO-S- ersetzt sein können, bedeuten. |

Bevorzugt wird dabei ein ferroelektrisches, flüssigkristallines Polymer bestehend aus wiederkehrenden Einheiten der Formel (I), bei dem $R^1$, $M^1$ und a die oben genannten Bedeutungen haben,
Y = H oder $CH_3$ ist und
die Gruppierung $(-A^1)_b(-M^2)_c(-A^2)_d(-M^3)_e(-A^3)_f$- bedeutet:

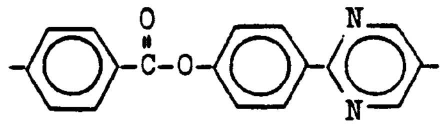 , 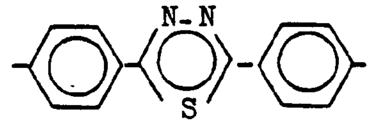 ,

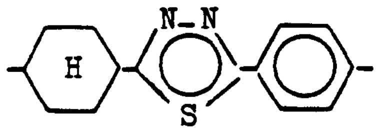 , 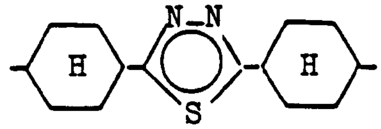 ,

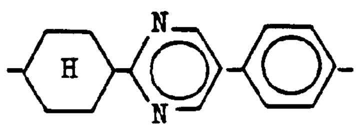 , 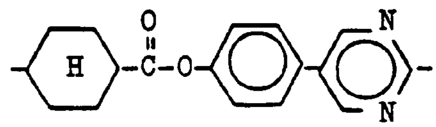 ,

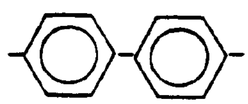 , 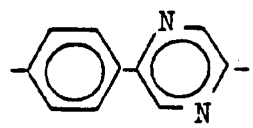 , 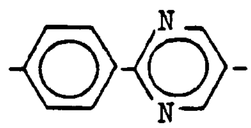 ,

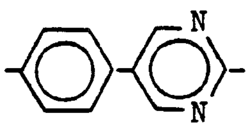 , 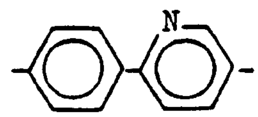 , 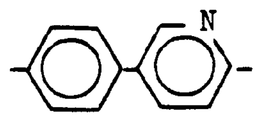 ,

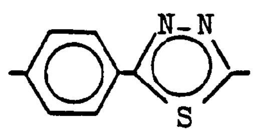 , 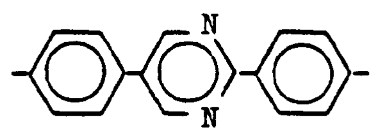 ,

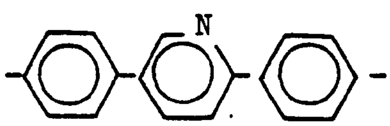 , 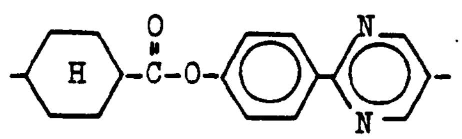 ,

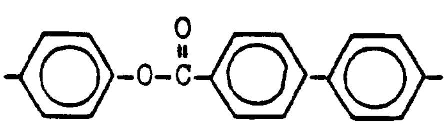 , 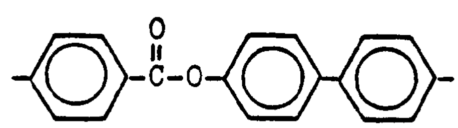 ,

Besonders bevorzugt wird ein ferroelektisches, flüssigkristallines Polymer bestehend aus wiederkehrenden Einheiten der Formel (I) bei dem

Y = H, $CH_3$

a = 6 bis 12 ist und

die Gruppierung $-M^1(-A^1)_b(-M^2)_c(-A^2)_d(-M^3)_e(-A^3)_f-$ bedeutet:

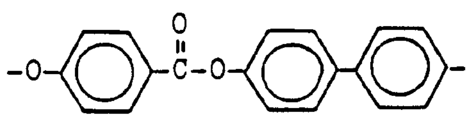 , 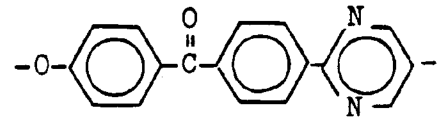 ,

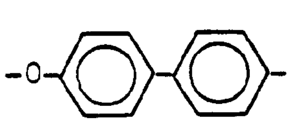 , 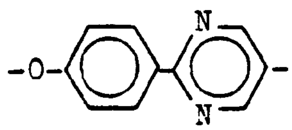 , 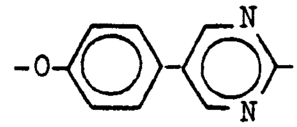

und $R^1$ ein zweifach chiraler Rest gemäß einer der nachfolgenden Formeln ist:

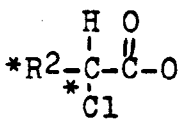 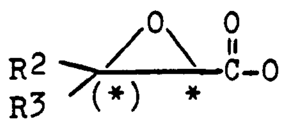 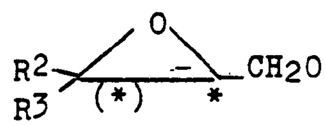

wobei $R^2$, $R^3$ = H, geradkettiges oder verzweigtes, chirales oder achirales Alkyl mit 1 bis 16 C-Atomen oder $R^2$ und $R^3$ zusammen ein cyclisches Alkyl mit 3 bis 8 C-Atomen bedeuten.

Die Herstellung der genannten Polymere erfolgt durch radikalische Polymerisation von Monomeren der Formel (II)

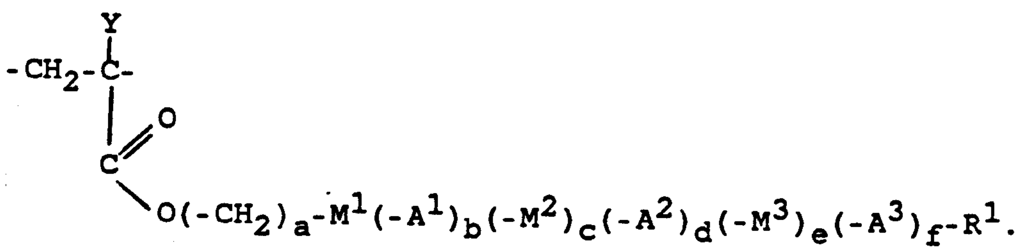

Die Monomere sind nach bekannten Verfahren zugänglich.

**Beispiel 1**

Darstellung des Monomeren (III)

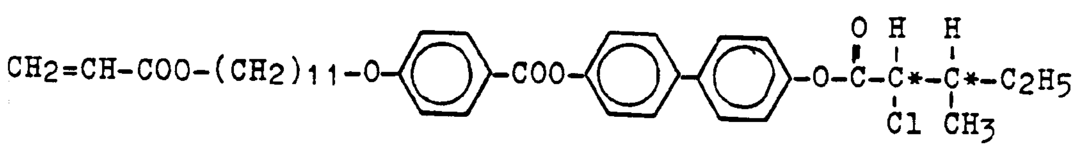

4-(11-Acryloyloxy-undecanyloxy)-benzoesäure-[4'-(2S,3R)-2-chlor-3-methyl-pentanoyloxy)-diphenyl-4-yl]-ester

a) Eine Lösung von 0,1 mol der Verbindung der Formel $Br-(CH_2)_{11}-Br$, 0,1 mol 4-Hydroxybenzoesäuremethylester, 0,1mol $Na_2CO_3$ und 1 mol-% NaI wird in 150 ml Aceton gelöst und 24 h unter Rückfluß erhitzt. Nach Abkühlen wird das Reaktionsgemisch mit 150 ml $CH_2Cl_2$ versetzt und 2 mal mit je 50 ml 0,1 N NaOH extrahiert. Nach Trocknen und Abziehen des Lösemittels erhielt man die Verbindung der Formel (IIIa)

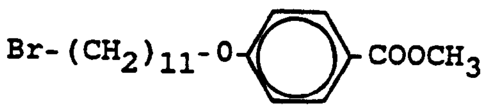

(IIIa)

Ausbeute: 85 %

b) 0,08 mol der Verbindung (IIIa) werden in 150 ml heißem Ethanol gelöst und 0,4 ml NaOH zugegeben. Das Reaktionsgemisch wird 15 Minuten unterRückfluß erhitzt und nach Abkühlen mit konz. Salzsäure angesäuert. Nach Abfiltrieren erhält man die Verbindung der Formel (IIIb)

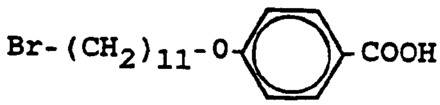

(IIIb)

Ausbeute: 80 %

c) 30 mmol 4,4'-Dihydroxybiphenyl werden in 120 ml $CH_2Cl_2$ und 42 mmol Diethylamin gelöst. Dazu werden bei Raumtemperatur 42 mmol Trimethylchlorsilan zugetropft und 1 h nachgerührt. Anschließend werden 20 mmol der Verbindung (IIIb), gelöst in 50 ml $CH_2cl_2$ und danach eine Lösung von 20 mmol Di-cyclohexylcarbodiimid und 3 mmol Dimethylaminopyridin in $CH_2Cl_2$ zugegeben. Es wird 26 h bei Raumtemperatur nachgerührt. Der Niederschlag wird abgesaugt und aus schwach salzsaurem Ethanol umkristallisiert.
Ausbeute: 40 % der Verbindung der Formel (IIIc)

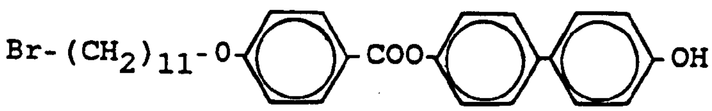

(IIIc)

d) 6 mmol der Verbindung (IIIc), 6 mmol der Verbindung der Formel

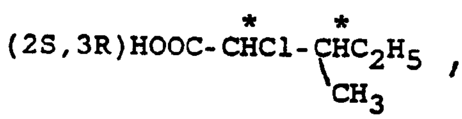

6 mmol Di-cyclohexylcarboddimid und 1 mmol Dimethylaminopyridin werden in 100 ml Dichlormethan gelöst und 36 h lang bei Raumtemperatur gerührt. Der Niederschlag wird abgesaugt und durch Umkristallisation aus Ethanol gereinigt. Man erhält die Verbindung der Formel (IIId)

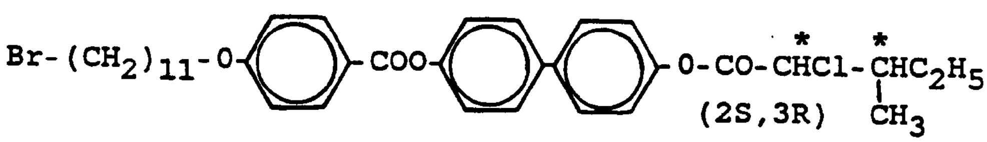

(IIId)

e) 5 mmol der Verbindung (IIId) und 10 mmol Acrylsäure werden zusammen mit 10 mmol Diethylamin und 0,2 g Hydrochinon in 60 ml Dimethylformamid gelöst und unter einer $N_2$-Atmosphäre 24 h bei 115°C gerührt. Nach Abkühlen wird mit 60 ml Methanol versetzt und 12 h im Eisschrank gekühlt. Der ausgefallene Niederschlag wird abfiltriert und durch Chromatographie an Kieselgel mit einer Mischung Dichlormethan/Petrolether im Verhältnis 1:4 gereinigt. Man erhält die Verbindung der Formel (III)

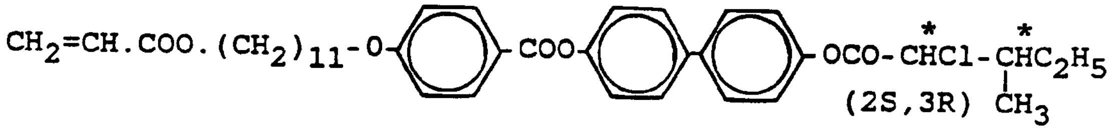

Polymerisation der Monomeren (III)

Das Monomer (III) wird in wasserfreiem THF gelöst und unter Zusatz von AIBN polymerisiert. Nach 24 h bei 60°C wird Methanol zugesetzt. Das ausfallende Polymer wird abgesaugt und mehrfach umgefällt oder chromatographisch gereinigt.

**Beispiel 2**

Darstellung des Monomeren 1c

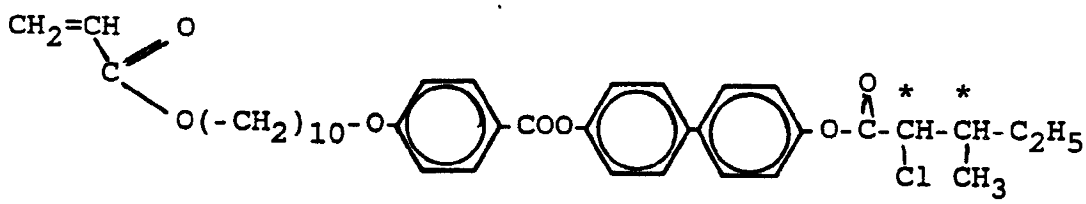

a) 2-(10-Hydroxy-decyloxy)-benzoesäure (1a):
Eine Mischung von 10-Bromdecanol (0,15 Mol), 4-Hydroxy-benzoesäure (0,15 Mol), KOH (0,33 Mol), KI (5 g) und 500 ml Wasser wird unter Rückfluß für 70 h erhitzt. Nach dem Abkühlen auf Raumtemperatur wird die Reaktionsmischung angesäuert (mit konzentrierter Salzsäure). Der weiße Niederschlag wird abfiltriert und zweimal aus Aceton umkristallisiert.
Ausbeute: 72,8 g (63 %); Schmelzpunkt: 114°C;
$^1$H-NMR (400 MH7, $CDCl_3$): δ=1.27-1.73 (m; 14H), 1.80 (tt, J=7 und 7Hz; 2H), 3.64 (t, J=7HZ, 2H), 4.02 (t, J=7Hz; 2H); 6.92, 802 (AA'BB', J(AB)=8.5Hz; 4H)
b) 4-(10-Acryloyloxy-decyloxy)-benzoesäure-(4-hydroxy-4-diphenylester) (Ib):
Unter Stickstoffatmosphäre wird Trimethylsilylchlorid (25 mmol) tropfenweise bei 0°C zu einer Lösung von 4 4-Dihydroxydiphenyl (18 mmol) und Triethylamin (60 mmol) in 100 ml trocknem Methylenchlorid zugegeben. Nach einstündigem Rühren bei 0°C werden 12 mmol der Verbindung 1a in 100 ml Methylenchlorid gelöst zugesetzt und anschließend 300 mg DMAP sowie 15 mmol DICC zugesetzt. Die Mischung wird 36 h lang bei Raumtemperatur gerührt. Anschließend wird Acrylsäurechlorid (15 mmol) tropfenweise hinzugeführt und die Reaktionsmischung für eine Stunde weitergerührt. Der weiße Niederschlag wird abfiltriert und das Rohprodukt aus HCl Methanol umkristallisiert.
Ausbeute: 1,8 g (29 %); Schmelzpunkt: 161 - 163°C $^1$H-NMR (400 MHz, $CDCl_3$): δ=1.36-1.64 (m; 12H), 1.68 (m; 2H), 1.82 (tt, J=7 und 7Hz; 2H), 4.05 (t, J=6Hz; 2H), 4.16 (t, J=6Hz; 2H), 5.82 (dd, J=10 und 1.5Hz; 1H), 6.12 (dd, J=17 und 10Hz; 1H), 6.14 (dd, J=17 und 10Hz; 1H), 6.94, 7.56 (AA'BB', J(AB)=8.5Hz; 4H), 6.97, 8.15 (AA'BB', J(AB)=8.5Hz; 4H), 7.23, 7.45 (AA'BB', J(AB)=8.5Hz, 4H)
c) 4-(10-Acryloyloxy-decyloxy)-benzoesäure-4-(2s,3s,2-chlor-3-methylpentanoyloxy)-4-diphenylester (1c)
Eine Lösung von 1b (3,3 mmol), (2s,3s)-2-chlor-3-methylpentansäure (3,7 mmol), DCC (3,7 mmol) und DMAP (50 mg) in 20 ml trockenem Methylenchlorid wird bei Raumtemperatur für 24 h gerührt. Anschließend wird der ausgefallene Niederschlag abfiltriert und durch Säulenchromatographie (Kieselgel) gereinigt.
Ausbeute: 1,16 g (54 %);
$^1$H-NMR (400 MHz, $CDCl_3$): δ=1,00 (t, J=7Hz; 3H), 1,16 (d, J=7Hz;3H), 1,29-1,52 (m; 12H), 1,63-1,87 (m; 6H), 2,24 (m; 1H), 4,05 (t, J=7Hz; 2H), 4,15 (t, J=7Hz; 2H), 4,40 (d, J=7Hz; 1H), 5,82 (dd, J=10 und 1,5Hz; 1H), 6,12 (dd, J=17 und 10 Hz; 1H), 6,40 (dd, J=17 und 1,5 Hz; 1H), 6,98, 8,16 (AA'BB', J(AB)=8,5Hz; 4H), 7,20, 7,60 (AA'BB', J(AB)=8,5Hz, 4H), 7,28, 7,60 (AA'BB', J(AB)=8,5Hz, 4H)

Polymerisation:

Das Monomer 1c wird in wasserfreiem Tetrahydrofuran mit AIBN in einer Stickstoffatmosphäre polymerisiert. Nach 24 h bei 60°C wird das Polymer durch Umfällung aus Methanol gereinigt. Durch chromatographische Reinigung kann eine geringe molekular Dispersität erreicht werden. Es wird ein Polymer mit der Molekularmasse Mw=35 000 erhalten (Ausbeute 48 %).

Die spontane Polarisation des Polymers bei 75°C bis 100°C beträgt 100 bis 1600 nC/cm$^2$; die Schaltzeit bei 14 V/μm beträgt 35 bis 1 msec.

**Beispiel 3**

Darstellung des Monomeren (2g)

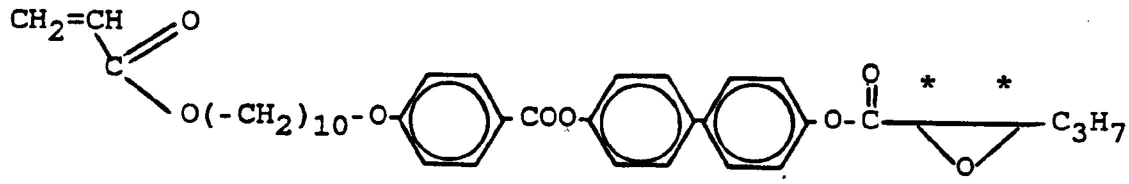

(cis-Oxiran)

a) 4-(Tetrahydropyran-2-yloxy)-benzoesäure

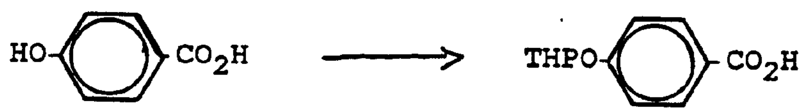

Ein Gemisch aus 13,8 g (0,1 mol) 4-Hydroxybenzoesäure und 16,8 g (0,2 mol) 3,4-Dihydropyran wird mit 6 Tropfen konz. HCl versetzt und 24 h bei 20°C gerührt. Das erstarrte Gemisch wird mit 50 ml Ether und anschließend mit 100 ml Petroether versetzt, abgesaugt und getrocknet.

Ausbeute 18,4 g (83 %)

b) 4 4-(Tetrahydropyran-2-yloxy)-benzoesäure -4'-hydroxybiphenylester

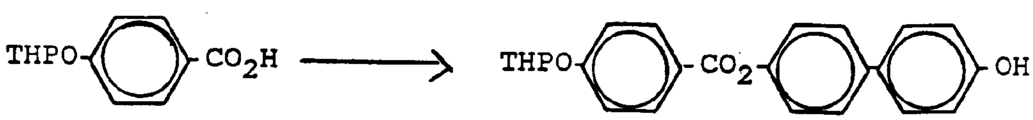

Zu einer Lösung von 16,7 g (90 mmol) 4,4'-Dihydroxybiphenyl und 18 ml (130 mmol) Triethylamin in 70 ml THF und 300 ml Methylenchlorid werden bei 0°C 17 ml (126 mmol) TMSCl innerhalb 0,5 h zugetropft. Nach 30 min Rühren bei 20°C werden 13,3 g (60 mmol) 2a, 13,4 g (65 mmol) DCCF und 1,1 g (9 mmol DMAP in Methylenchlorid gelöst dazugegeben. Man rührt 18 h bei RT, saugt dann ab und engt vollständig ein. Reinigung des Rückstands erfolgt durch Umkristallisation aus Aceton.

Ausbeute: 9,6 g (24,6 mmol) 41 %

c) 2R,3S-Epoxyhexansäure

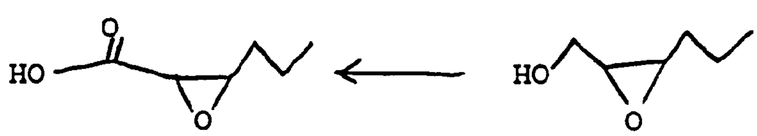

Zu einer Lösung von 2,55 g (22 mmol) 2R,3S-Epoxyhexanol in 42 ml $CCl_4$ und 35 ml $CH_3CN$ werden 14,2 g (66 mmol) $NaIO_4$ in 70 ml $H_2O$ und 286 mg (1,1 mmol) $RuCl_3$ gegeben. Das Gemisch wird bei RT 3 h stark gerührt. Anschließend wird abgenutscht, 3 x mit 50 ml $CH_2Cl_2$ extrahiert, die vereinigten organ. Phasen Ix mit NaCl-Lösung gewaschen, getrocknet ($NaSO_4$) und eingeengt.

Ausbeute: 2,56 g (20 mmol) 90 %

d) 2R,3S-4- 4-(Tetrahydropyran-2-yloxy)benzoyloxy -4'-(2,3-Epoxyhexansäure)biphenylester (2d)

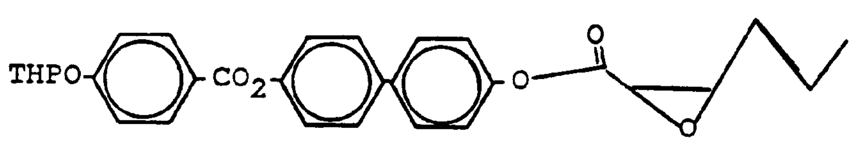

Ein Gemisch aus 1,95 g (8 mmol) 2b, 0,65 g (5 mmol) 2c, 1,3 g (6 mmol DCCI und eine Spatelspitze DMAP in 50 ml $CH_2Cl_2$ (abs.) wird 18 h bei 20°C gerührt. Es wird abgesaugt, eingeengt und das Produkt chromatographisch (mit $CH_2Cl_2$/PE : 1:1 als Laufmittel) gereinigt.
Ausbeute: 1,46 g (2,9 mmol) 58 %
e) 2R,3S-4 4-Hydroxybenzoyloxy)-4'-(2,3-epoxyhexansäure)biphenylester,(2e)

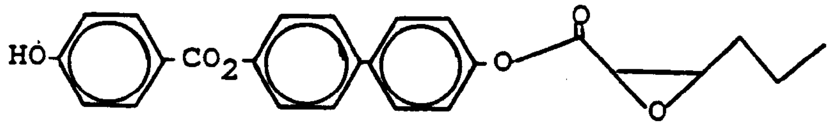

Ein Gemisch aus 1,4 g (2,9 mmol) 2d, 0,075 g (3 mmol) PPTS und 50 ml MeOH wird für 3 h bei 50°C gerührt. Das Lösungsmittel wird bis auf ca. 10 ml abgezogen und das bei 0°C ausgefallene Produkt abgenutscht.
Ausbeute: 980 mg (81 %)
f) Acrylsäure-(10-hydroxy)-decylester (2f)

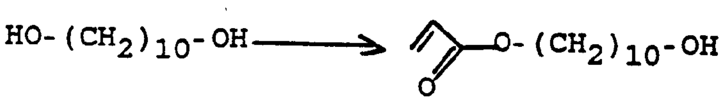

Eine Lösung von 8,7 g (50 mmol) 1,10-Decandiol und 6,9 ml (50 mmol) TEA in 100 ml abs. THF wird tropfenweise mit 4,5 g (50 mmol) Acrylsäurechlorid versetzt und 20 min bei RT gerührt. Es wird mit 50 ml gesättigter $NH_4$-Cl-Lösung hydralysiert, 3x mit Ethanol extrahiert. Die vereinigten organ. Phasen werden Ix mit gesättigter $Na_2CO_3$-Lösung und Ix mit gesättigter NaCl-Lösung gewaschen, über $MgSO_4$ getrocknet und eingeengt. Reinigung erfolgt chromatographisch.
Ausbeute: 4,0 g (17,5 mmol) 35 %
g) 2R,3S-4 4-(10-Acryloyloxydecyloxy)-benzoyloxy 4'-(2,3-epoxyhexansäure)-biphenylester (cis)

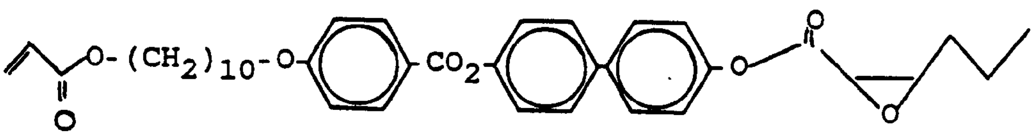

900 mg (2,15 mmol) 2e und 570 mg (2,5 mmol) 2f werden mit 435 mg (2,15 mmol) DEAD und 563 mg (2,15 mmol) TPP umgesetzt.
Ausbeute: 370 mg (0,59 mmol) 27 %

Polymerisation des Monomeren 2g

300 mg (0,48 mmol) des Monomeren werden in THF mit 3 mg (0,018 mmol) AIBN polymerisiert. Die Reinigung erfolgt chromatographisch.
Ausbeute: 121 mg (40 %)

Das Polymer P besitzt eine mittlere Molmasse $M_w$=9 200 und eine Molekular-Dispersität E=$M_w$/$M_N$=1,58. Das flüssigkristalline Polymer kann sowohl ferroelektrisch wie auch elektroklin schalten. Erstaunlicherweise ist die Schaltzeit jedoch nur wenig von der Temperatur abhängig, was durch nachfolgende Tabelle verdeutlicht wird:

| T [°C] | 96 | 110 | 128 | 160 |
|---|---|---|---|---|
| τ [ms] | 0,9 | 1,5 | 1,9 | 2,2 |

## Patentansprüche

1. Flüssigkristallines Polymer bestehend aus wiederkehrenden Einheiten der Formel (I)

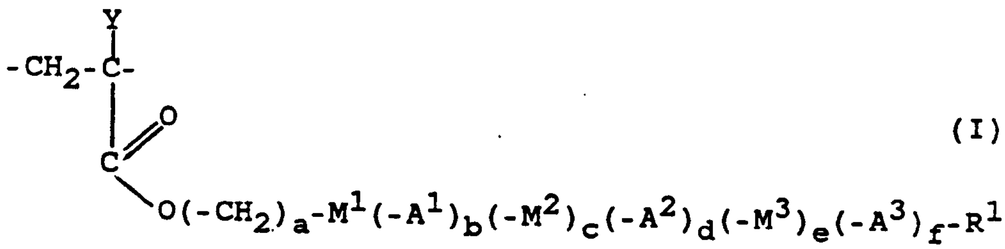

(I)

wobei

Y = H, $CH_3$, F,

$R^1$ = Rest mit mindestens zwei Chiralitätszentren aus der Gruppe der nachfolgenden Formeln

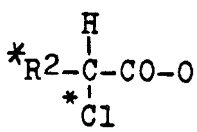
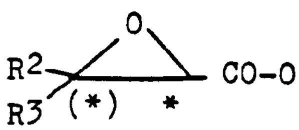
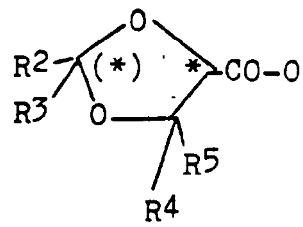
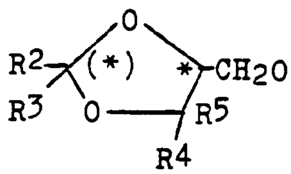
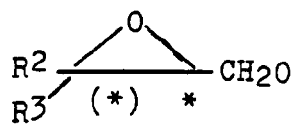
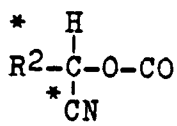
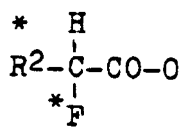
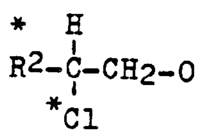
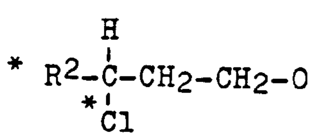
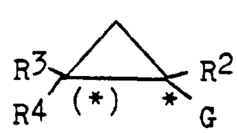

$R^2$,$R^3$,$R^4$,$R^5$ =H oder geradkettiges oder verzweigtes, chirales oder achirales Alkyl mit 1 bis 16 oder Alkenyl mit 2 bis 16 C-Atomen, bei dem auch eine $-CH_2$-Gruppe durch -O-, -CO-O- oder -O-CO-ersetzt sein kann, oder $R^2$ und $R^3$ bzw. $R^3$ und $R^4$ zusammen oder cyclisches Alkyl mit 3 bis 8 C-Atomen

$*R^2$ = chirales $R^2$

(*) = chirales C falls $R^2$, $R^3$ und/oder $R^4$ achiral

a = 2 bis 20, vorzugsweise 6 bis 12

b,c,d,e,f = 0 oder 1 mit der Maßgabe, daß d+e+f = 2 oder 3 ist

$A^1$,$A^2$,$A^3$ = gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6-diyl, Pyridin-2,5-diyl, Pyrimidin-2,5-diyl, (1,3,4)-Thiadiazol-2,5-diyl, 1,3-Dioxan-2,5-diyl, 1,3-Dithian-2,5-diyl

$M^2$ $M^3$ = gleich oder verschieden CO-O, O-CO, CO-S, S-CO, $CH_2$-O, O-$CH_2$,

$M^1$ = O,

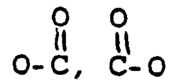

G = geradkettiges oder verzweigtes Alkylen mit 1 bis 16 C-Atomen oder Alkenylen mit 2 bis 16 C-Atomen, bei dem auch eine oder zwei nichtbenachbarte -$CH_2$-Gruppen durch -O-, -S-, -O-CO-, -CO-O-, -S-CO- oder -CO-S- ersetzt sein können bedeuten.

**2.** Ferroelektrisches, flüssigkristallines Polymer bestehend aus wiederkehrenden Einheiten der Formel (I) aus Anspruch 1 dadurch gekennzeichnet, daß
y = H, $CH_3$ ist und
die Gruppierung $(-A^1)_b(-M^2)_c(-A^2)_d(-M^3)_e(-A^3)_f$- bedeutet:

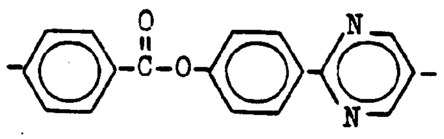 , 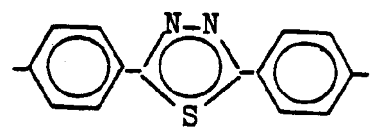 ,

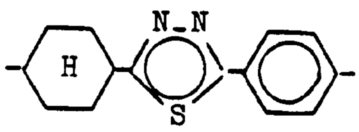 , 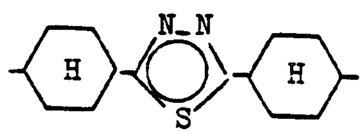 ,

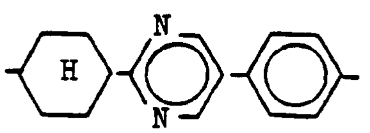 , 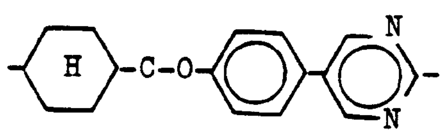 ,

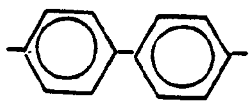 , 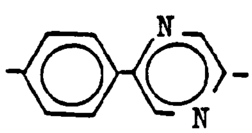 , 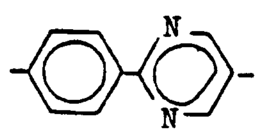 ,

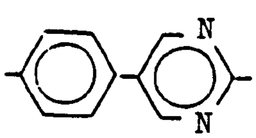 , 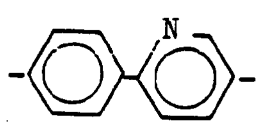 , 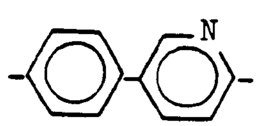 ,

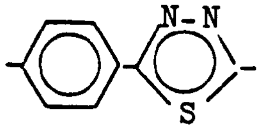 , 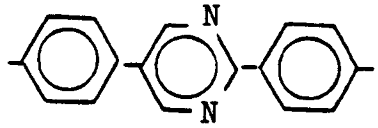 ,

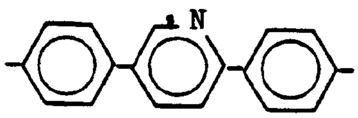 , 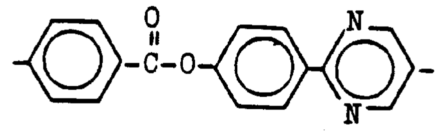

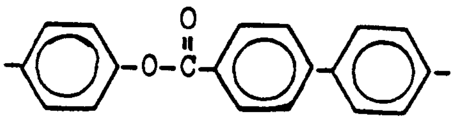 , 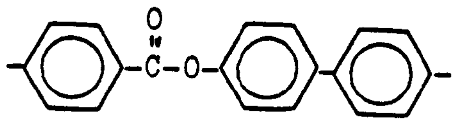

3. Ferroelektrisches, flüssigkristallines Polymer bestehend aus wiederkehrenden Einheiten der Formel (I) aus Anspruch 1, dadurch gekennzeichnet, daß
Y H, $CH_3$
a = 6 bis 12 ist und
die Gruppierung $-M^1(-A^1)_b(-M^2)_c(-A^2)_d(-M^3)_e(-A^3)_f-$ bedeutet:

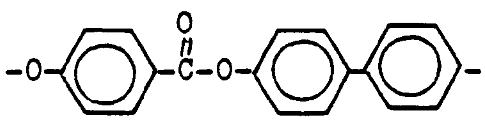 , 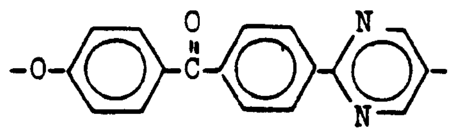 ,

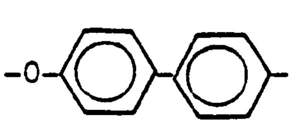 , 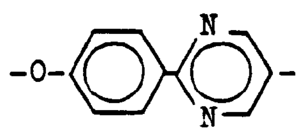 , 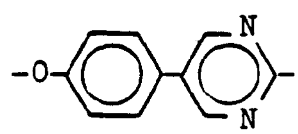

und $R^1$ ein zweifach chiraler Rest gemäß einer der nachfolgenden Formeln ist:

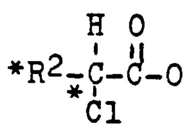 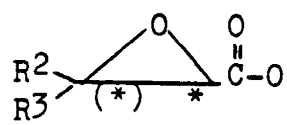 , 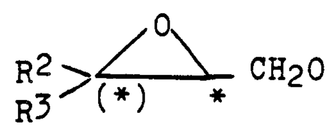

wobei $R^2$, $R^3$ = H, geradkettiges oder verzweigtes, chirales oder achirales Alkyl mit 1 bis 16 C-Atomen oder $R^2$ und $R^3$ zusammen ein cyclisches Alkyl mit 3 bis 8 C-Atomen bedeuten.

4. Verfahren zur Herstellung von Polymeren nach einem der Ansprüche 1 bis 3, dadurch gekennzeichnet, daß man Verbindungen der Formel (II)

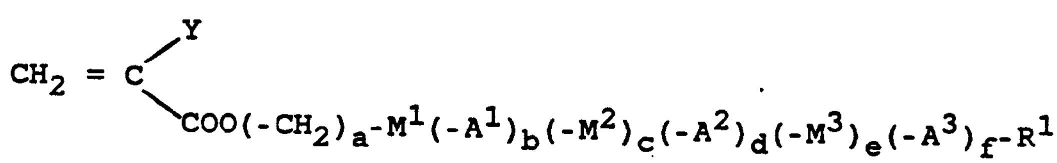

mittels eines Radikalbildners polymerisiert, wobei
Y, $M^1$, $M^2$, $M^3$, $A^1$, $A^2$, $A^3$, $R^1$, a, b , c, d, e, f
die jeweils in den Ansprüchen 1 bis 3 angegebenen Bedeutungen haben.

5. Verwendung von ferroelektrischen, flüssigkristalli nen Polymeren nach einem der Ansprüche 1 bis 3 in elektrooptischen Bauteilen.

6. Elektrooptisches Bauteil enthaltend ein Polymer nach einem der Ansprüche 1 bis 3.

## Claims

1. A liquid-crystalline polymer composed of repeating units of the formula (I)

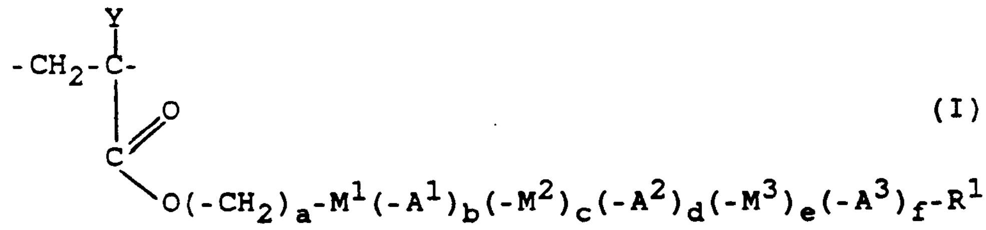

(I)

in which

| | |
|---|---|
| Y | = H, $CH_3$ or F, |
| $R^1$ | = a radical from the group of formulae which follow having at least two chiral centers |

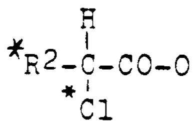
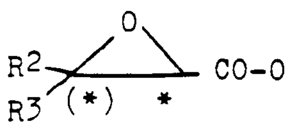
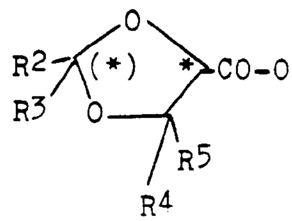

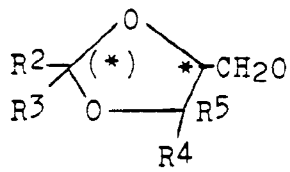
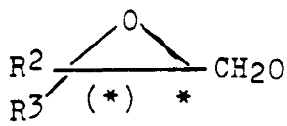

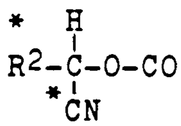
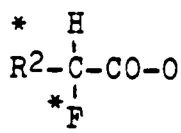
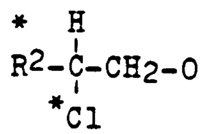

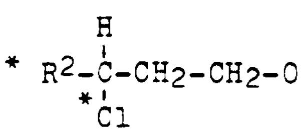
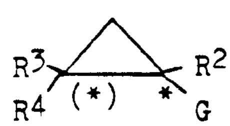

| | |
|---|---|
| $R^2$,$R^3$,$R^4$ and $R^5$ | = H or a straight-chain or branched, chiral or achiral alkyl having 1 to 16, or alkenyl having 2 to 16, carbon atoms and in which one $-CH_2-$ group can be replaced by -O-, -CO-O- or -O-CO-, or $R^2$ and $R^3$, or $R^3$ and $R^4$, together form a cyclic alkyl having 3 to 8 carbon atoms |
| $*R^2$ | = chiral $R^2$ |
| (*) | = chiral carbon if $R^2$, $R^3$ and/or $R^4$ are achiral |
| a | = 2 to 20, preferably 6 to 12 |
| b,c,d,e and f | = 0 or 1 with the proviso that d+e+f = 2 or 3 |
| $A^1$,$A^2$ and $A^3$ | = identical or different 1,4-phenylene in which 1 or 2 hydrogen atoms can be replaced by F, Cl and/or CN, trans-1,4-cyclohexylene in which 1 or 2 hydrogen atoms can be replaced by F, Cl, CN and/or $CH_3$, 2,5-pyrazinediyl, 3,6-pyridazinediyl, 2,5-pyridinediyl, 2,5-pyrimidinediyl, (1,3,4)-thiadiazole-2,5-diyl, 1,3-dioxan-2,5-diyl or |

| | |
|---|---|
| | 1,3-dithian-2,5-diyl |
| $M^2$ and $M^3$ | = identical or different CO-O, O-CO, CO-S, S-CO, $CH_2$-O or O-$CH_2$ |
| $M^1$ | = O, |

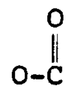 or 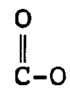

| | |
|---|---|
| G | = straight-chain or branched alkylene having 1 to 16 carbon atoms, or alkenylene having 2 to 16 carbon atoms, and in which one or two non-adjacent -$CH_2$- groups can be replaced by -O-, -S-, -O-CO-, -CO-O-, -S-CO- or -CO-S-. |

**2.** The ferroelectric, liquid-crystalline polymer composed of repeating units of the formula (I) as claimed in claim 1, wherein
$Y$ = H or $CH_3$ and
the group $(-A^1)_b(-M^2)_c(-A^2)_d(-M^3)_e(-A^3)_f$- denotes:

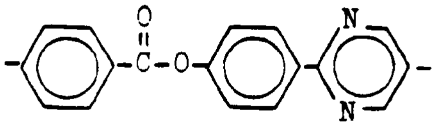 , 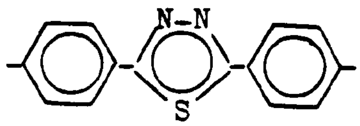 ,

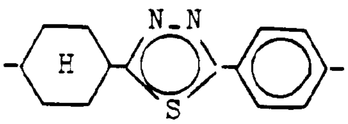 , 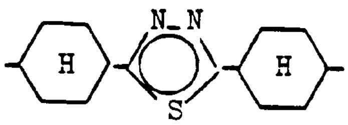 ,

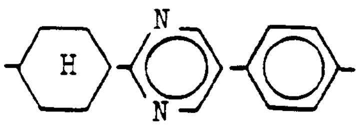 , 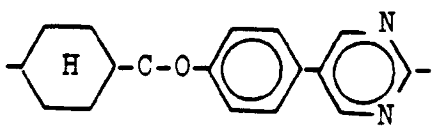 ,

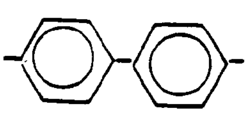 , 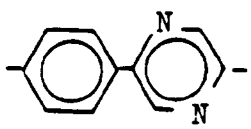 , 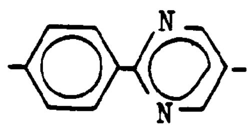 ,

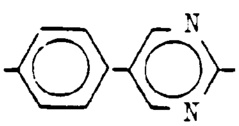 , 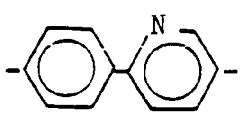 , 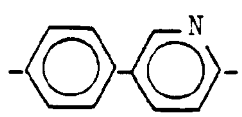 ,

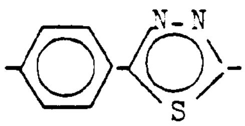 , 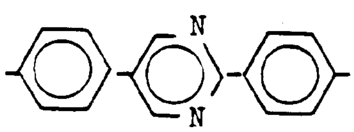 ,

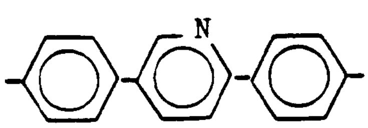 , 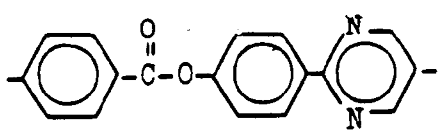

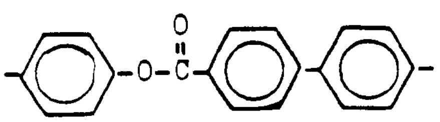 , 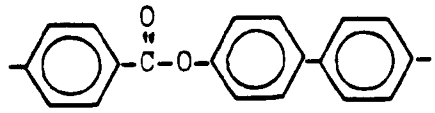

3. The ferroelectric, liquid-crystalline polymer composed of repeating units of the formula (I) as claimed in claim 1, wherein
$Y = H$ or $CH_3$
$a = 6$ to 12 and
the group $-M^1(-A^1)_b(-M^2)_c(-A^2)_d(-M^3)_e(-A^3)_f-$ denotes:

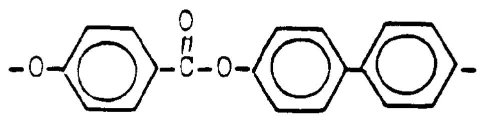 , 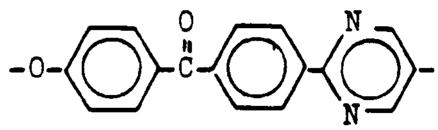 ,

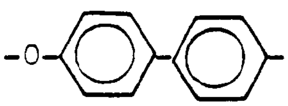 , 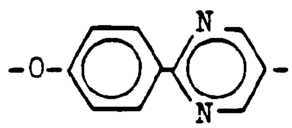 , 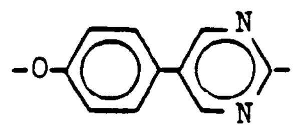

and $R^1$ is a radical according to one of the following formulae having two chiral centers:

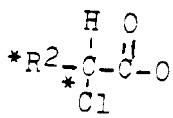 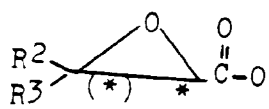 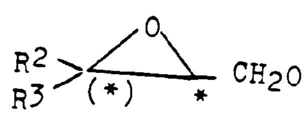

in which $R^2$ and $R^3$ = H, a straight-chain or branched, chiral or achiral alkyl having 1 to 16 carbon atoms or $R^2$ and $R^3$ together form a cyclic alkyl having 3 to 8 carbon atoms.

4. A process for the preparation of a polymer as claimed in any of the claims 1 to 3, which comprises polymerizing compounds of the formula (II)

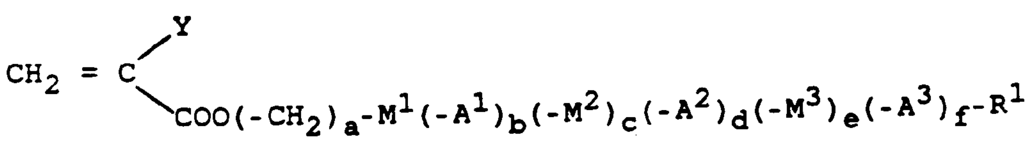

using a free-radical former, where
Y, $M^1$, $M^2$, $M^3$, $A^1$, $A^2$, $A^3$, $R^1$, a, b, c, d, e and f each have the meanings given in claims 1 to 3.

5. The use of ferroelectric, liquid-crystalline polymers as claimed in any of the claims 1 to 3 in electrooptical components.

6. An electrooptical component containing a polymer as claimed in any of the claims 1 to 3.

## Revendications

1. Polymère à propriétés de cristaux liquides, consistant en des motifs récurrents de formule (I)

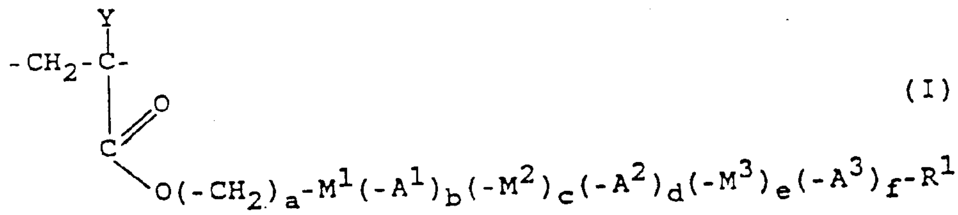

(I)

dans laquelle

Y représente H, $CH_3$, F

$R^{1}$1 représente un reste comportant au moins deux centres de chiralité et qui est choisi dans l'ensemble répondant aux formules suivantes :

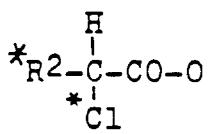
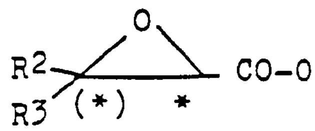
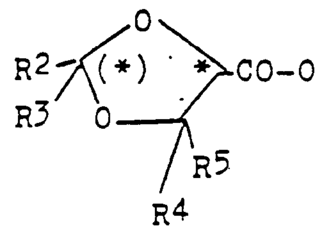

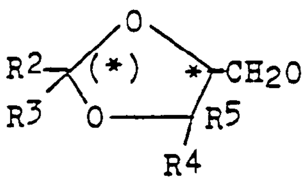
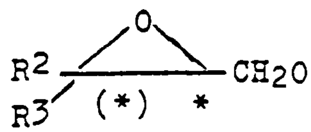

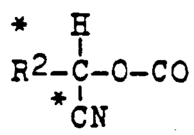
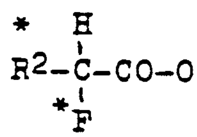
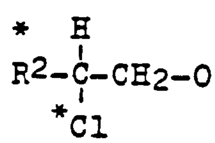

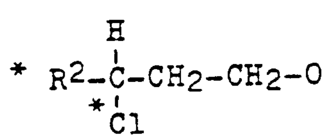
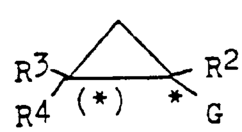

$R^2$, $R^3$, $R^4$, $R^5$ représentent chacun H ou un groupe alkyle linéaire ou ramifié, chiral ou non chiral, comportant 1 à 16 atomes de carbone ou un groupe alcényle comportant 2 à 16 atomes de carbone dans lesquels un groupe $-CH_2$ peut également être remplacé par -O-, -CO-O- ou -O-CO-, ou bien $R^2$ et $R^3$ ou R" et $R^4$ forment ensemble un groupe alkyle cyclique ayant 3 à 8 atomes de carbone,

$*R^2$ représente un groupe $R^2$ chiral,

(*) représente un carbone chiral si $R^2$, $R^3$ et/ou $R^4$ est ou sont des groupes non chiraux,

a) vaut 2 à 20, avantageusement 6 à 12, b,c,d,e,f valent 0 ou 1, à la condition que la somme (d+e+f) valent 2 ou 3,

$A^1$,$A^2$,$A^3$ représentent chacun un groupe 1,4-phénylène, ces groupes étant identiques ou différents et 1 ou 2 H de ces groupes pouvant être remplacés par , Cl et/ou CN, un groupe trans-1,4-cyclohexylène dans lequel 1 ou 2 H peut ou peuvent être remplacé(s) par F, Cl, CN et/ou $CH_3$, un groupe pyrazine-2,5-diyle, pyridazine-3,6-diyle, pyridine-2,5-diyle, pyrimidine-2,5-diyle, (1,3,4)-thiadiazol-2,5-diyle, 1,3-dioxanne-2,5-diyle, 1,3-dithianne2,5-diyle,

$M^2$, $M^3$ sont identiques ou différents et représentent chacun CO-O, O-CO, CO-S, S-CO, $CH_2$ -O, $O-CH_2$,

M[1] représente O,

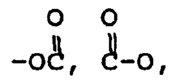

G représente un groupe alkylène linéaire ou ramifié ayant 1 à 16 atomes de carbone ou alcénylène ayant 2 à 16 atomes de carbone, dans lesquels un ou deux groupes $-CH_2-$ non voisins peuvent également être remplacés par -O-,-S-, -O-CO-, -CO-O, -S-CO- ou -CO-S- .

**2.** Polymère ferro-électrique à propriétés de cristaux liquides, consistant en des motifs récurrents de formule (I) selon la revendication 1, polymères caractérisé en ce que :

Y représente H ou $CH_3$, et

le groupement $(-A^1)_b(-M^2)_c(-A^2)_d(-M^3)_e(-A^3)_f-$ représente :

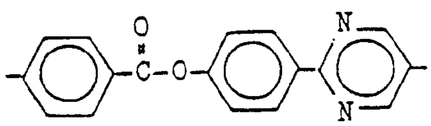 , 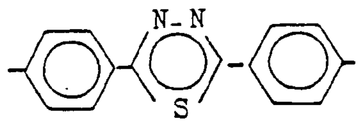 ,

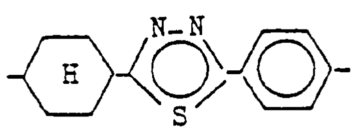 , 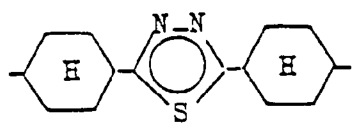 ,

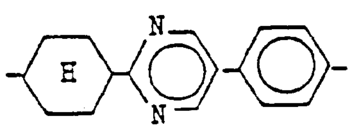 , 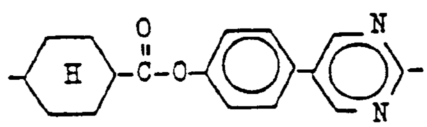 ,

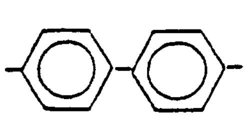 , 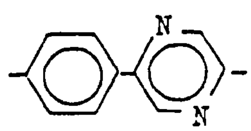 , 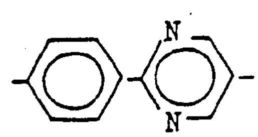 ,

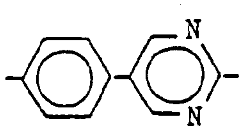 , 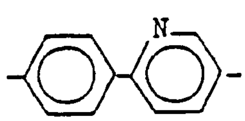 , 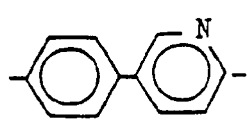 ,

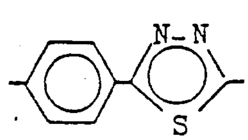 , 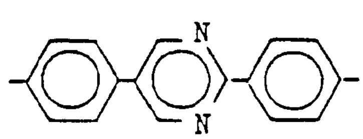 ,

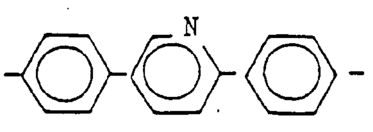 , 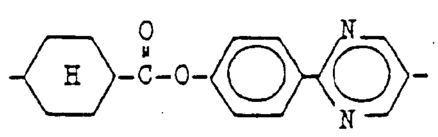 ,

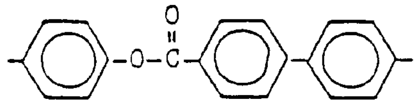 , 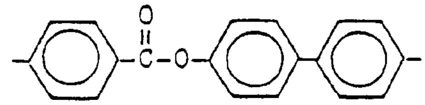 ,

3. Polymère ferro-électrique à propriétés de cristaux liquides, consistant en des motifs récurrents de formule (I) selon la revendication 1, polymère caractérisé en ce que :

Y représente H ou $CH_3$

a vaut 6 à 12, et

le groupement $-M^1-(A^1)_b(-M^2)_c(-A^2)_d(-M^3)_e(-A^3)_f-$ représente :

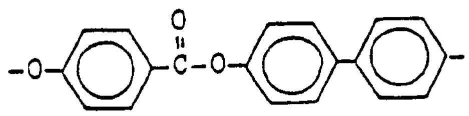 , 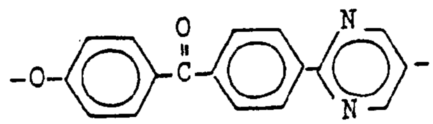 ,

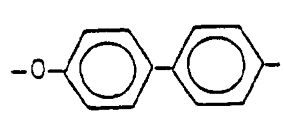 , 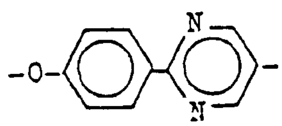 , 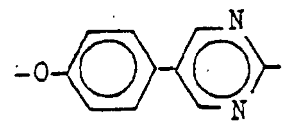

et $R^1$ représente un reste comportant deux centres de chiralité et répondant à l'une des formules suivantes :

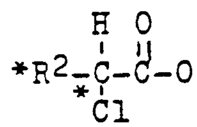 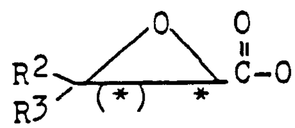 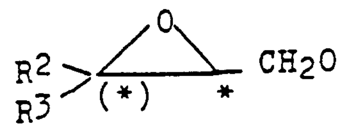

dans lesquelles $R^2$ et $R^3$ représentant chacun H, un groupe alkyle ayant 1 à 16 atomes de carbone, linéaire ou ramifié, chiral ou non chiral, ou bien $R^2$ et $R^3$ forment ensemble un groupe alkyle cyclique (cycloalkyle) comportant 3 à 8 atomes de carbone .

4. Procédé pour préparer des polymères selon l'une quelconque des revendications 1 à 3, caractérisé en ce qu'on provoque la polymérisation, à l'aide d'un générateur de radicaux libres, de composés de formule (II)

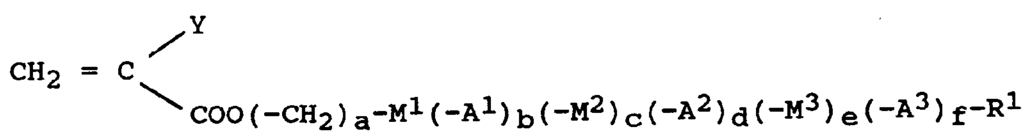

dans laquelle

Y, $M^1$, $M^2$, $M^3$, $A^1$, $A^2$, $A^3$, $R^1$, a, b, c, d, e,f ont les sens déjà indiqués dans les revendications 1 à 3.

5. Utilisation de polymères ferro-électriques, à propriétés de cristaux liquides, selon l'une des revendications 1 à 3, dans des composants électro-optiques.

6. Composant électro-optique contenant un polymère selon l'une des revendications 1 à 3.